# EUROPÄISCHE PATENTSCHRIFT

(11) **EP 2 350 468 B1**
(45) Veröffentlichungstag und Bekanntmachung des Hinweises auf die Patenterteilung: **02.04.2014**
(21) Anmeldenummer: 09764720.0
(22) Anmeldetag: 27.11.2009
(51) Int. Cl.: F16B 5/06

(54) **U-FÖRMIGER BEFESTIGUNGSCLIP**
U-SHAPED FASTENING CLIP
CLIP DE FIXATION ELASTIQUE EN U

(30) Priorität: 27.11.2008 FR 0858036
(43) Veröffentlichungstag der Anmeldung: 03.08.2011
(73) Patentinhaber: TRW Automotive Electronics & Components GmbH, 78315 Radolfzell (DE)
(72) Erfinder: KUHM, Michel, F-67340 Ingwiller (FR)
(74) Vertreter: Prinz & Partner
(86) Internationale Anmeldenummer: PCT/EP2009/008464
(87) Internationale Veröffentlichungsnummer: WO 2010/060633

(56) Entgegenhaltungen:
- WO-A-2006/132497
- GB-A- 2 334 298
- US-A- 6 101 686
- US-A1- 2002 004 971
- US-A1- 2005 095 064
- US-A1- 2007 186 389

## Beschreibung

Die vorliegende Erfindung betrifft einen U-förmigen, elastischen Befestigungsclip gemäß dem Oberbegriff des Anspruchs 1.

Die Erfindung betrifft das Gebiet der Befestigung von Einrichtungen an einer Struktur und insbesondere die Befestigung von Einsätzen, die Einrichtungen an einer Struktur halten. Die bevorzugte Anwendung ist die Ausstattung einer Struktur eines Straßenfahrzeugs vom Typ Kraftfahrzeug oder dergleichen mit funktionalen Zubehörteilen und/oder Verkleidungszubehörteilen.

Die Struktur eines Straßenfahrzeugs vom Typ Kraftfahrzeug weist in bekannter Weise eine Reihe von unterschiedlich geformten Öffnungen auf, die dazu vorgesehen sind, Befestigungselemente, Clips genannt, aufzunehmen und mit diesen zusammenzuwirken, um verschiedene Zubehörteile zu halten. Es sind verschiedene Arten Befestigungsclips zur Befestigung von Einrichtungen an der Struktur von Fahrzeugen bekannt. Diese Befestigungsclips, die im Allgemeinen aus Kunststoffmaterialien hergestellt sind, weisen einen Kopf auf, der so ausgebildet ist, dass er die Verbindung mit der zu befestigenden Einrichtung gewährleistet, sowie eine Basis, die mit Kraft oder durch Blockierung in eine Öffnung der Struktur eingeführt wird. Diese Öffnung kann rechteckig, länglich oder rund sein.

Für die genaue Positionierung bestimmter Einrichtungen weisen die Strukturen vorzugsweise Öffnungen in Form von Langlöchern mit mindestens zwei parallelen Flächen auf, die zur Positionierung der Einrichtungen in eine Richtung dienen. Die genaue Positionierung in eine zweite, insbesondere orthogonal zur vorhergehenden verlaufenden Richtung wird durch zwei andere Flächen insbesondere einer Öffnung mit rechteckigem Querschnitt erhalten.

Herkömmlicherweise und wie in dem Dokument US 2005/0155191 A1 dargestellt, hat ein Befestigungsclip ein im Wesentlichen U-förmiges Profil und ist dazu geeignet, auf Höhe von zwei Flügeln mit einer Zunge zusammenzuwirken, die der Einsatz aufweist.

Sobald der Clip in die Struktur eingesetzt ist, muss er eine ausreichende Kraft zum Halten des Einsatzes gewährleisten, während die Kraft, die zum Einsetzen des Einsatzes in die Öffnung der Struktur erforderlich ist, so gering wie möglich sein muss.

Es ist häufig erforderlich, diese Einsätze auszubauen, um Wartungsarbeiten vorzunehmen, was dem Befestigungsclip schadet und seine Haltekraft verringert. Während der Lebensdauer des Fahrzeugs müssen bestimmte Einrichtungen somit mehr als 15 Mal ausgebaut und wieder eingebaut werden, was mit der Benutzung der Clips aus dem Stand der Technik nicht gewährleistet werden kann.

Die durch Clips befestigten Einrichtungen sind bei der Benutzung des Fahrzeugs häufig Vibrationen und abrupten Beschleunigungen ausgesetzt, was die Verschlechterung des Clips und/oder des Einsatzes oder sogar der Öffnung der Struktur beschleunigt. Darüber hinaus können die Herstellungstoleranzen der Einrichtungen und der Clips zu großen Abmessungsunterschieden zwischen diesen führen und eine Verschlechterung der von dem Clip an der Einrichtung erzeugten Haltekraft hervorrufen. Da ferner bekannt ist, dass die Einrichtungen und die Clips an Stellen angeordnet sein können, die großen Temperaturschwankungen ausgesetzt sein können, wie etwa im Motorraum, und da bekannt ist, dass diese Einrichtungen und diese Clips aus Materialien unterschiedlicher Art und somit mit unterschiedlichen Ausdehnungskoeffizienten bestehen können, führt dies zu unterschiedlichen Wärmedehnungen der beiden Teile und somit zu Änderungen bei den Einstellungen, die zusätzlich zur Verschlechterung der von den Befestigungsclips erzeugten Haltekraft führen können.

Die Verschlechterung der von dem Clip erzeugten Haltekraft kann zur Folge haben, dass eine relative Verschiebung zwischen dem befestigten Teil und dem Befestigungsclip hervorgerufen werden kann, was bis zu ihrer Trennung führen kann.

Die Betriebsanforderungen haben häufig zur Verwendung von Metallclips geführt, wobei diese jedoch einer hohen Anzahl von Vorgängen zur Demontage und erneuten Montage schlecht standhalten.

In dem Dokument GB 2 334 298 A ist ein Befestigungsclip gemäß dem Oberbegriff vom Anspruch 1 offenbart.

Die Erfindung schlägt vor, die Nachteile aus dem Stand der Technik zu beseitigen, sodass der Widerstand gegen ein Herausziehen eines Einsatzes, der über einen Clip an einer Struktur angebracht ist, erhöht wird und dadurch mehrere Demontagevorgänge ohne Beschädigung ermöglicht werden.

Zu diesem Zweck schlägt die Erfindung einen elastischen, U-förmigen Befestigungsclip mit den Merkmalen des Anspruchs 1 vor.

Die Erfindung hat den Vorteil, die Haltefunktionen des Clips einerseits an einer Zunge eines Einsatzes und andererseits in einer Öffnung einer Struktur, an der dieser Einsatz befestigt wird, zu trennen. Die besondere Ausführung des erfindungsgemäßen Clips erzeugt eine hohe Ausreißfestigkeit des Einsatzes in Bezug auf die Struktur, und seine Festigkeit ermöglicht eine große Anzahl von Vorgängen zur Demontage und erneuten Montage ohne Beschädigung.

Weitere Merkmale und Vorteile der Erfindung ergeben sich aus der nachfolgenden ausführlichen Beschreibung der nicht einschränkenden Ausführungsformen der Erfindung anhand der beigefügten Zeichnungen. Darin zeigen:
- Figur 1 schematisch und von oben einen erfindungsgemäßen Befestigungsclip;
- Figur 2 schematisch und in einer Endansicht einen erfindungsgemäßen Befestigungsclip in der Position zum Halten eines im Schnitt dargestellten Einsatzes in einer Öffnung einer Struktur, die ebenfalls im Schnitt dargestellt ist;
- Figur 3 schematisch und im Querschnitt entlang einer in Figur 1 dargestellten Ebene BB den Clip aus Figur 1;
- Figur 4 schematisch und im Längsschnitt entlang einer in Figur 2 dargestellten Ebene AA den Clip aus Figur 1;
- Figur 5 gemäß einer zu Figur 2 analogen Darstellung die vorläufige Positionierung des Clips aus Figur 1 auf einem Einsatz;
- Figur 6 gemäß einer zu Figur 5 analogen Ansicht ein Zusammendrücken des Clips aus Figur 1 für seine Einführung in eine Öffnung einer Struktur;
- Figur 7 gemäß einer zu Figur 5 analogen Darstellung eine Zurückfedern des Clips aus Figur 1 nach seiner Einführung in diese Öffnung;
- Figur 8 gemäß einer schematischen Querschnittdarstellung gemäß einer Ebene BB den Clip in der Position aus Figur 7.

Die Erfindung betrifft das Gebiet der Befestigung von Einrichtungen und/oder von Einsätzen 30, die so ausgebildet sind, dass sie diese Einrichtungen an einer Struktur 40 halten können. Diese Struktur 40 ist mit einer Öffnung 41 versehen, die mindestens zwei parallele Flächen 42, 42A aufweist und im Allgemeinen rechteckig ist.

Bei der hier beschriebenen besonderen Anwendung weist ein Einsatz 30 eine Zunge 31 auf, die mindestens zwei parallele Flächen 33, 33A aufweist und so ausgebildet ist, dass sie in eine Öffnung 41 der Struktur 40 eingesetzt werden kann. Diese Zunge 31 weist eine Öffnung 32 auf. Üblicherweise weist der Einsatz 30 noch eine Wand 34 auf, die insgesamt senkrecht zur Zunge 31 verläuft und sich auf der einen und auf der anderen Seite dieser Zunge erstreckt. Diese Wand 34 weist auf der Seite der Zunge 31 eine Einsatzfläche 35 auf.

Um ein gutes Halten des Einsatzes 30 in der Struktur 40 zu gewährleisten und eine große Anzahl von Montage-/Demontagevorgängen zu ermöglichen, wird zwischen dem Einsatz 30 und der Struktur 40 ein Clip 1 eingesetzt.

Die Erfindung betrifft einen Befestigungsclip 1, der dazu vorgesehen ist, eine derartige Befestigung zu gewährleisten.

Eine besondere Ausführungsform der Erfindung ist in den Figuren veranschaulicht.

Die Erfindung betrifft einen elastischen Befestigungsclip 1. Er kann entweder elastische Teile aufweisen oder vorzugsweise vollständig aus einem elastischen Material, insbesondere aus einem nachgiebigen Kunststoffmaterial hergestellt sein. Dieser Clip 1 ist U-förmig und weist eine Mittelebene P auf, die durch einen Mittelabschnitt 2 verläuft, der der Basis des U entspricht. Um die Mittelebene P, d.h. auf der einen und auf der anderen Seite dieser Ebene, erstrecken sich zwei Flügel 3 und 3A vorzugsweise im Wesentlichen symmetrisch zur Mittelebene P. Der Clip ist dazu vorgesehen, die Zunge 31 eines Einsatzes 30 zu bedecken, um diese in die Öffnung 41 einer Struktur 40 einzusetzen und dort zu halten. Der Clip erfüllt somit eine erste Funktion, die aus dem Halten an der Zunge 31 des Einsatzes 30 durch seitliches Halten an den Flächen 33 und 33A dieser Zunge 31 und durch Klemmen in dem Loch 32 des Einsatzes 30 besteht.

Ausgehend von dem Mittelabschnitt 2 und in Richtung eines freien Endes 4; 4A, die die Flügel 3 bzw. 3A entgegengesetzt zu dem Mittelabschnitt aufweisen, weisen zu diesem Zweck die Flügel nacheinander und in dieser Reihenfolge jeweils Folgendes auf:
- eine untere Stützfläche 5; 5A, die zum Klemmen der Flächen 33 und 33A der Zunge 31 des Einsatzes 30 zum Inneren des U gewandt ist. Diese unteren Stützflächen 5; 5A sind vorzugsweise so ausgebildet, dass sie die Zunge 31 unter der Wirkung einer Annäherung der freien Ende 4; 4A feststehend klemmen können;
- dann eine untere, zum Äußeren des U hervorstehende Erhebung 7; 7A, die so ausgebildet ist, dass sie durch eine Öffnung 41 einer Struktur 40 zur Aufnahme des Einsatzes 30 dringen kann. Diese unteren Erhebungen 7; 7A bilden vorzugsweise die Enden von zum Äußeren des Clips 1 hervorstehenden, unteren Seitenprofilen 6; 6A in deren Bereich mit dem größten Abstand zur Mittelebene P;
- dann zurückgesetzt in eine zur Mittelebene P senkrechte Richtung in Bezug auf diese untere Erhebung 7; 7A eine untere Kontaktfläche 8; 8A, die zum Äußeren des U gewandt ist und so ausgebildet ist, dass sie mit einer Innenfläche 42, 42A der Öffnung 41 zusammenzuwirken kann.

Einer der Flügel 3 weist eine zum Inneren des U vorstehende Nase 9 zum Zusammenwirken mit dem Loch 32 des Einsatzes 30 unter der Wirkung einer Annäherung der freien Enden 4; 4A der Flügel 3, 3A auf. Diese Nase 9 steht vorzugsweise im Wesentlichen senkrecht zur Mittelebene P hervor.

Erfindungsgemäß weist der Flügel 3, der die Nase 9 trägt, einen ersten Spalt 10 auf, der sich von der Umgebung des Mittelabschnitts 2 zu seinem freien Ende 4 erstreckt, um einerseits eine erste elastische Abdeckung 13, die die Nase 9 trägt, und andererseits eine zweite elastische Abdeckung 12, die mindestens eine untere Erhebung 7 und mindestens eine untere Kontaktfläche 8 trägt, zu trennen.

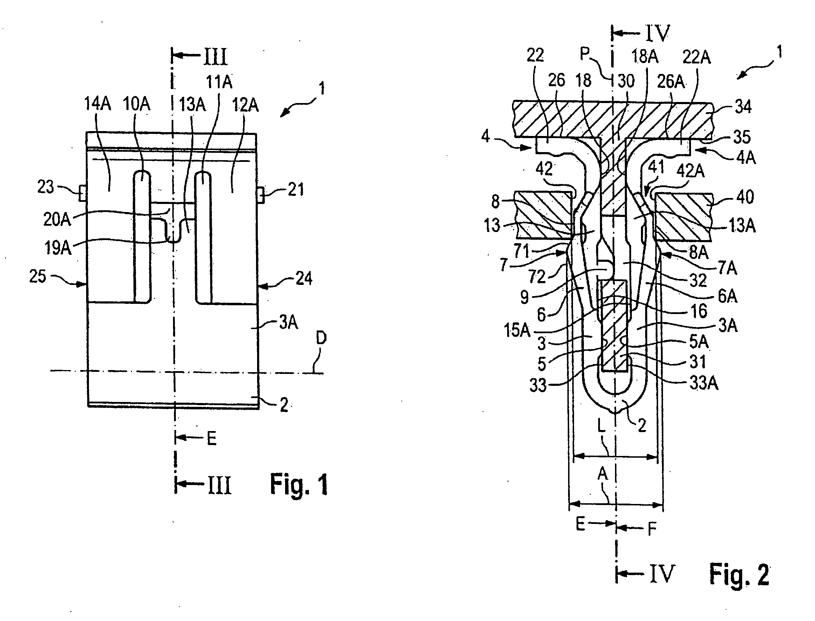

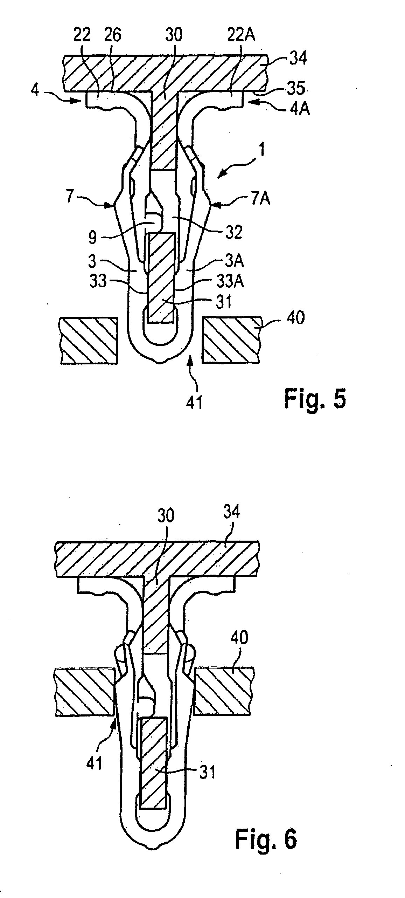

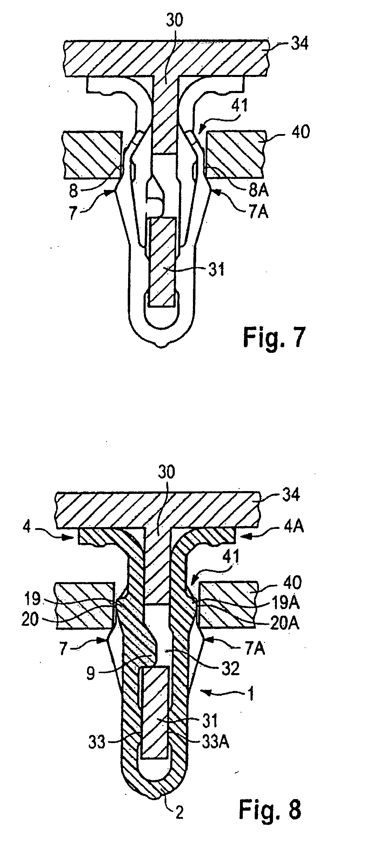

Es ist zu verstehen, dass die unteren Erhebungen 7 und 7A im freien Zustand, wie in Figur 5 zu sehen, eine solche Größe haben, dass sie sich ihrem Einsetzen durch die Öffnung 41 der Struktur 40 widersetzen. Diese Erhebungen 7, 7A sind so ausgelegt, dass sie in einer zusammengedrückten Stellung des Clips 1, wie in Figur 6 zu sehen, durch diese Öffnung 41 dringen. Nachdem die Erhebungen vollständig durch die Öffnung 41 gedrungen sind, entfernen sich diese erneut unter der Wirkung der Elastizität des Clips 1 oder zumindest der Teile der Flügel 3, 3A, die die Erhebungen 7, 7A tragen, wie in Figur 7 zu sehen, um den Einsatz 30 fest an der Struktur 40 zu halten. Wie in Figur 2 zu sehen, ist jede Erhebung 7, 7A vorzugsweise von zwei Rampen umgeben, wobei eine Rampe 72 eine relativ geringe Neigung hat, um ein leichtes Einsetzen des Clips 1, der den Einsatz 30 trägt, in die Struktur 40 zu ermöglichen, und die andere Rampe 71 eine stärkerer Neigung hat, die eine erhebliche Auszugskraft erfordert, um den Clip 1 aus der Struktur 40 herauszuziehen, wodurch jegliches unbeabsichtigtes Entfernen verhindert wird.

Somit ist der Abstand A zwischen den unteren Erhebungen 7, 7A auf der einen und auf der anderen Seite des Clips 1 im freien Zustand des Clips 1 größer als die Breite L der Öffnung 41 und in einem zusammengedrückten Zustand des Clips 1 geringer als diese Breite L.

Der erste Spalt 10 führt dazu, dass die Entkopplung zwischen einerseits der Funktion des translatorischen Haltens gemäß einer Einführungsrichtung E des Clips 1 auf den Einsatz 30, die von der Nase 9 gewährleistet ist, und andererseits der Funktion des translatorischen Haltens gemäß einer Einführungsrichtung F des Clips 1 in die Struktur 40, die von den Erhebungen 7, 7A gewährleistet ist, ermöglicht wird. Diese Richtungen E und F fallen bei dem bevorzugten Ausführungsbeispiel, das in den Figuren veranschaulicht ist, zusammen.

Um einen guten Kräfteausgleich zu realisieren, wird bei der Erfindung die Verdoppelung der Elemente in Betracht gezogen, die zur Realisierung dieser Funktionen zum translatorischen Halten verwendet werden. Aufgrund der kleinen Größe der Löcher 32 der Einsätze 30, die häufig standardisiert sind, wird die Verwendung einer einzigen Nase 9 aus Scherfestigkeitsgründen empfohlen. Es ist einfacher, die Halter der Erhebungen 7, 7A zu verdoppeln.

Wie in den Figuren zu sehen ist, weist somit der Flügel 3, der die Nase 9 trägt, auf der zum ersten Spalt 10 entgegengesetzten Seite vorzugsweise einen zweiten Spalt 11 auf, der sich von der Umgebung des Mittelabschnitts 2 zu seinem freien Ende 4 erstreckt, um einerseits die erste elastische Abdeckung 13, die die Nase 9 trägt, und andererseits eine dritte elastische Abdeckung 14, die mindestens ein unteres Seitenprofil 6 und mindestens eine untere Kontaktfläche 8 trägt, zu trennen.

Es ist zu verstehen, dass die Bildung von mehr Spalten ebenso in Betracht gezogen werden kann, die Bereiche mit unterschiedlichen Funktionen trennen und deren elastisches Verhalten vorteilhaft unterschiedlich gewählt sein kann.

Bei einer ersten Ausführungsform, wie in den Figuren zu sehen, mündet der erste Spalt 10 auf Höhe des freien Endes 4 des Flügels 3, der die Nase 9 trägt, nicht aus. Diese Anordnung gewährleistet die gute Entkopplung der Funktionen und gleichzeitig eine gute Gesamtfestigkeit des Clips 1, die aufgrund der hohen Anzahl der Vorgänge zur Demontage und erneuten Montage, denen der Clip möglicherweise standhalten muss, erforderlich ist.

Bei einer zweiten Ausführungsform, die nicht dargestellt ist, mündet der erste Spalt 10 auf Höhe des freien Endes 4 aus, was die Realisierung des Clips erleichtert jedoch seinen Widerstand verringert.

In gleicher Weise mündet in anderen Ausführungsformen der zweite Spalt 11 auf Höhe des freien Endes 4 aus oder nicht.

Das gute Halten des Clips 1 innerhalb der Öffnung 41 wird durch die unteren Kontaktflächen 8, 8A gebildet, die mit den Innenflächen 42, 42A der Öffnung 41 zusammenwirken.

Dieses Halten wird vorteilhaft auf Höhe der ersten elastischen Abdeckung 13 vervollständigt, welche in einer bevorzugten Ausführung, wie in den Figuren zu sehen, auf der zur Nase 9 entgegengesetzten Seite und zum Äußeren des Clips 1 ein oberes Seitenprofil 19 aufweist, das einen größeren Abstand zum Mittelabschnitt 2 hat als die untere Erhebung 7. Diese obere Erhebung 19 weist eine obere Kontaktfläche 20 auf, die so ausgebildet ist, dass sie mit einer Innenfläche 42, 42A der Öffnung 41 zusammenwirken kann. Es ist zu verstehen, dass somit eine zweite Abstützung an diesen Flächen gebildet ist, die sich von derjenigen unterscheidet, die von den Flächen 8 und 8A gebildet ist. Die obere Kontaktfläche 20 hat vorzugsweise einen größeren Abstand zum Mittelabschnitt 2 als die untere Kontaktfläche 8.

Analog zum Flügel 3 weist der Flügel 3A, der dem Flügel 3 gegenüberliegt, vorzugsweise gegenüber der Nase 9 eine erste elastische Abdeckung 13A auf, die auf der zur Nase 9 entgegengesetzten Seite und zum Äußeren des Clips 1 ein oberes Seitenprofil 19A aufweist, das einen größeren Abstand zum Mittelabschnitt 2 hat als die untere Erhebung 7A, wobei diese obere Erhebung 19A eine obere Kontaktfläche 20A aufweist, die so ausgebildet ist, dass sie mit einer Innenfläche 42, 42A der Öffnung 41 zusammenwirken kann. Die obere Kontaktfläche 20A hat vorzugsweise einen größeren Abstand zum Mittelabschnitt 2 als die untere Kontaktfläche 8A. Somit ist die zweite Funktion des Clips 1, die darin besteht, den Einsatz 30 über Stützen, die auf Höhe der Innenflächen 42, 42A der Öffnung 41 verstärkt sind, sehr fest in der Öffnung 41 der Struktur 40 zu halten, perfekt gewährleistet.

Ebenso weist der Flügel 3A vorzugsweise einen ersten Spalt 10A auf, der sich von der Umgebung des Mittelabschnitts 2 zu seinem freien Ende 4A erstreckt, um einerseits diese erste elastische Abdeckung 13A und andererseits eine zweite elastische Abdeckung 12A zu trennen, welche mindestens eine untere Erhebung 7A und mindestens eine untere Kontaktfläche 8A trägt.

Dieser Flügel 3A weist vorteilhaft auf der zum ersten Spalt 10A entgegengesetzten Seite einen zweiten Spalt 11A auf, der sich von der Umgebung des Mittelabschnitts 2 zu seinem freien Ende 4A erstreckt, um einerseits die erste elastische Abdeckung 13A und andererseits eine dritte elastische Abdeckung 14A zu trennen, welche mindestens ein unteres Seitenprofil 6A und mindestens eine untere Kontaktfläche 8A trägt.

Je nach Ausführungsform mündet der erste Spalt 10A auf Höhe des freien Endes 4A aus oder nicht. Ebenso in Abhängigkeit von der Ausführungsform mündet der zweite Spalt 11A auf Höhe des freien Endes 4A aus oder nicht.

Die Nase 9 ist für eine bessere Scherfestigkeit vorzugsweise die einzige Nase.

Bei dieser bevorzugten Ausführungsform weist nur ein Flügel 3 die Nase 9 auf, und der andere Flügel 3A weist dann ihr gegenüber eine Aussparung 15A auf, die so ausgebildet ist, dass sie in der zusammengedrückten Stellung des Clips den Durchgang des vorstehenden Teils der Nase 9 zum Inneren des Clips 1 erlaubt, und die Verlängerung der Nase 9 um eine Länge ermöglicht, die der Tiefe dieser Aussparung 15 entspricht. Diese Anordnung ist vorteilhaft, um eine bessere Verriegelung zu realisieren und eine Abkopplung mit Kraft aufzuerlegen. Sie ermöglicht auch die Verwendung von Einsätzen, die Zungen 31 mit variablen Dicken aufweisen. Bei einer weiteren, nicht dargestellten Ausführungsvariante weist der Clip 1 auf Höhe des Flügels 3A gegenüber der Nase 9 kein Material auf, wobei ihr gegenüber beispielsweise ein Spalt oder eine Öffnung ausgebildet ist.

Der Flügel 3, der die Nase 9 aufweist, weist vorteilhaft in deren Nähe auf der Seite des Mittelabschnitts 2 eine Aussparung 16 auf, um die Abstützung des Clips 1 an einem Einsatz 30 auf Höhe der unteren Stützflächen 5, 5A zu gewährleisten. Diese Aussparung 16 ermöglicht auch die Eliminierung von Nahtproblemen auf Höhe der Zunge 31 des Einsatzes 30.

Der Clip 1 weist vorzugsweise mindestens eine zweite 12 oder eine dritte elastische Abdeckung 14 auf, die mindestens ein unteres Seitenprofil 6 und mindestens eine untere Kontaktfläche 8 aufweist, wobei die zweite 12 oder dritte elastische Abdeckung 14 eine höhere Flexibilität hat als die erste elastische Abdeckung 13, die die Nase 9 trägt.

Die gleiche Anordnung ist bei dem anderen Flügel 3A anwendbar, der mindestens eine zweite 12A oder eine dritte elastische Abdeckung 14A aufweist, die mindestens ein unteres Seitenprofil 6A und mindestens eine untere Kontaktfläche 8A trägt, wobei die zweite 12A oder dritte elastische Abdeckung 14A eine höhere Flexibilität hat als die erste elastische Abdeckung 13A, welche vorzugsweise wie oben beschrieben eine Aussparung 15A aufweist

Um das Einführen eines Einsatzes 30 zu vereinfachen, weist die Nase 9 vorzugsweise eine Eingangsabschrägung 17 oder eine Neigung auf der Seite des freien Endes 4 auf.

Für ein besseres Halten der Zunge 31 des Einsatzes 30 auf seiner gesamten Höhe weist jeder Flügel 3, 3A zwischen der unteren Kontaktfläche 8, 8A, die er aufweist, und seinem freien Ende 4, 4A eine obere Stützfläche 18, 18A auf, die so ausgeführt ist, dass sie unter der Wirkung der Elastizität des Clips 1 in Anlage an eine der Flächen 33, 33A der Zunge des Einsatzes 30 gelangen kann.

Um das Halten des Clips 1 an einem Einsatz 30 weiter zu verbessern, weist jedes freie Ende 4, 4A, die jeder Flügel 3 bzw. 3A aufweist, eine Lasche 22, 22A auf, die sich senkrecht zur Mittelebene P erstreckt und sich dabei von dieser entfernt und so ausgebildet ist, dass sie sich an einer Einsatzfläche 35 abstützen kann, welche im Wesentlichen senkrecht zu den beiden parallelen Flächen 33, 33A der Zunge 31, die der Einsatz 30 aufweist, verläuft, auf denen sich die unteren Stützflächen 5, 5A abstützen können. Jede dieser Laschen 22, 22A weist vorteilhaft eine Stützfläche 26, 26A auf, die senkrecht zur Mittelebene P verläuft und zum Mittelabschnitt 2 entgegengesetzt ist, um sich an der Einsatzfläche 35 abzustützen.

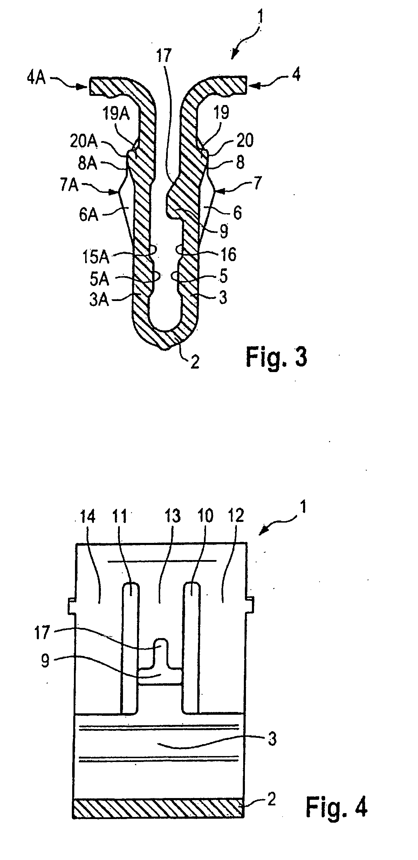

Wie in den Figuren 1 und 4 zu sehen, erstreckt sich der Clip 1 selbst vorzugsweise gemäß einer zur Mittelebene P parallelen Längsrichtung D und weist in Richtung D auf der einen und auf der anderen Seite hervorstehend mindestens einen ersten Abstandsstift 21 an einem ersten Längsende 24 und/oder mindestens einen zweiten Abstandsstift 23 an einem zweiten Längsende 25 auf, wobei die Abstandsstifte so ausgebildet sind, dass sie das translatorische Halten des Clips 1 bezüglich der Öffnung 41 der Struktur 40 gewährleisten können.

Die Ausführung des erfindungsgemäßen Clips 1 stellt sicher, dass beim Herausziehen des Einsatzes 30 aus der Struktur 40 mit einer ausreichenden Zugkraft der Einsatz 30 mit dem Clip 1 versehen herausgezogen wird. Das Herausziehen des Einsatzes 30 allein ist dann nämlich unmöglich.

Der Clip 1 besteht vorzugsweise aus einem Stück, das durch Formen eines Kunststoffmaterials im Allgemeinen auf Polyamidbasis erhalten wird, das möglicherweise mit Glasfasern verstärkt ist oder Zusätze enthält, die eine verstärkte Flexibilität verleihen und gleichzeitig eine höhere Bruchfestigkeit gewährleisten. Diese Ausführung ist lediglich beispielhaft angegeben und schränkt den Umfang der Erfindung keineswegs ein. Somit kann der erfindungsgemäße Clip 1 auch in Form von mehreren Basiselementen vorliegen, die zusammengefügt werden, um das Endstück zu bilden, wobei jedoch für jedes dieser Elemente Materialien verwendet werden, die für die Verwendungs-anforderungen am Besten geeignet sind.

## Patentansprüche

1. U-förmiger, elastischer Befestigungsclip (1) mit einer durch einen Mittelabschnitt (2) verlaufenden Mittelebene (P), um die ausgehend von dem Mittelabschnitt zwei Flügel (3; 3A) nacheinander und in dieser Reihenfolge jeweils eine untere Stützfläche (5; 5A) aufweisen, die zum Klemmen eines Einsatzes nach innen gewandt ist, dann eine untere, nach außen vorstehende Erhebung (7; 7A), die so ausgebildet ist, dass sie durch eine Öffnung dringen kann, die in einer Struktur zur Aufnahme des Einsatzes gebildet ist, dann zurückgesetzt in Bezug auf die untere Erhebung (7; 7A) eine untere Kontaktfläche (8; 8A), die nach außen gewandt und so ausgebildet ist, dass sie mit einer Innenfläche der Öffnung zusammenwirken kann, wobei einer der Flügel (3) eine nach innen vorstehende Nase (9) aufweist, um unter der Wirkung einer Annäherung von freien Enden (4; 4A) der Flügel, die zum Mittelabschnitt (2) entgegengesetzt sind, mit einem Loch des Einsatzes zusammenzuwirken, wobei der die Nase (9) tragende Flügel (3) einen ersten Spalt (10) aufweist, der sich von der Umgebung des Mittelabschnitts (2) zu seinem freien Ende (4) erstreckt, um einerseits eine erste elastische Abdeckung (13), die die Nase (9) trägt, und andererseits eine zweite elastische Abdeckung (12), die mindestens eine untere Erhebung (7) und mindestens eine untere Kontaktfläche (8) trägt, zu trennen, wobei die erste elastische Abdeckung (13) auf der zur Nase (9) entgegengesetzten Seite und zum Äußeren des Clips (1) ein oberes Seitenprofil (19) in der Form einer Erhebung aufweist, wobei die obere Erhebung (19) eine obere Kontaktfläche (20) aufweist, die so ausgebildet ist, dass sie mit einer Innenfläche der Öffnung zusammenwirken kann, **dadurch gekennzeichnet**, das die obere Erhebung (19) einen größeren Abstand zum Mittelabschnitt (2) hat als die untere Erhebung (7).

2. Befestigungsclip (1) nach einem der vorhergehenden Ansprüche, **dadurch gekennzeichnet, dass** der Flügel (3), der die Nase (9) trägt, auf der zum ersten Spalt (10) entgegengesetzten Seite einen zweiten Spalt (11) aufweist, der sich von der Umgebung des Mittelabschnitts (2) zu seinem freien Ende (4) erstreckt, um einerseits die erste elastische Abdeckung (13), die die Nase (9) trägt, und andererseits eine dritte elastische Abdeckung (14), die mindestens ein unteres Seitenprofil (6) und mindestens eine untere Kontaktfläche (8) trägt, zu trennen.

3. Befestigungsclip (1) nach einem der vorhergehenden Ansprüche, **dadurch gekennzeichnet, dass** der erste Spalt (10) auf Höhe des freien Endes (4) des Flügels (3), der die Nase (9) aufweist, nicht ausmündet.

4. Befestigungsclip (1) nach Anspruch 2, **dadurch gekennzeichnet, dass** der zweite Spalt (11) auf Höhe des freien Endes (4) nicht ausmündet.

5. Befestigungsclip (1) nach einem der vorhergehenden Ansprüche, **dadurch gekennzeichnet, dass** die obere Kontaktfläche (20) einen größeren Abstand zum Mittelabschnitt (2) hat als die untere Kontaktfläche (8).

6. Befestigungsclip (1) nach einem der vorhergehenden Ansprüche, **dadurch gekennzeichnet, dass** der Flügel (3A), der dem die Nase (9) tragenden Flügel (3) gegenüberliegt, gegenüber der Nase eine erste elastische Abdeckung (13A) aufweist, die auf der zur Nase (9) entgegengesetzten Seite und zum Äußeren des Clips (1) ein oberes Seitenprofil (19A) aufweist, das einen größeren Abstand zum Mittelabschnitt (2) hat als die untere Erhebung (7A), wobei die obere Erhebung (19A) eine obere Kontaktfläche (20A) aufweist, die so ausgebildet ist, dass sie mit einer Innenfläche der Öffnung zusammenwirken kann.

7. Befestigungsclip (1) nach dem vorhergehenden Anspruch, **dadurch gekennzeichnet, dass** die obere Kontaktfläche (20A) einen größeren Abstand zum Mittelabschnitt (2) hat als die untere Kontaktfläche (8A).

8. Befestigungsclip (1) nach Anspruch 6 oder 7, **dadurch gekennzeichnet, dass** der Flügel (3A) einen ersten Spalt (10A) aufweist, der sich von der Umgebung des Mittelabschnitts (2) zu seinem freien Ende (4A) erstreckt, um einerseits die erste elastische Abdeckung (13A) und andererseits eine zweite elastische Abdeckung (12A) zu trennen, welche mindestens eine untere Erhebung (7A) und mindestens eine untere Kontaktfläche (8A) trägt.

9. Befestigungsclip (1) nach dem vorhergehenden Anspruch, **dadurch gekennzeichnet, dass** der Flügel (3A) auf der zum ersten Spalt (10A) entgegengesetzten Seite einen zweiten Spalt (11A) aufweist, der sich von der Umgebung des Mittelabschnitts (2) zu seinem freien Ende (4A) erstreckt, um einerseits die erste elastische Abdeckung (13A) und andererseits eine dritte elastische Abdeckung (14A) zu trennen, welche mindestens ein unteres Seitenprofil (6A) und mindestens eine untere Kontaktfläche (8A) trägt.

10. Befestigungsclip (1) nach Anspruch 8 oder 9, **dadurch gekennzeichnet, dass** der erste Spalt (10A) auf Höhe des freien Endes (4A) nicht ausmündet.

11. Befestigungsclip (1) nach Anspruch 9, **dadurch gekennzeichnet, dass** der zweite Spalt (11A) auf Höhe des freien Endes (4A) nicht ausmündet.

12. Befestigungsclip (1) nach einem der vorhergehenden Ansprüche, **dadurch gekennzeichnet, dass** nur ein Flügel (3) die Nase (9) aufweist und der andere Flügel (3A) ihr gegenüber eine Aussparung (15A) aufweist, die so ausgebildet ist, dass sie in der zusammengedrückten Stellung des Clips den Durchgang des vorstehenden Teils der Nase (9) zum Inneren des Clips (1) erlaubt, und die Verlängerung der Nase (9) um eine Länge ermöglicht, die der Tiefe der Aussparung (15A) entspricht.

13. Befestigungsclip (1) nach einem der vorhergehenden Ansprüche, **dadurch gekennzeichnet, dass** der Flügel (3), der die Nase (9) aufweist, in deren Nähe auf der Seite des Mittelabschnitts (2) eine Aussparung (16) aufweist, um die Abstützung des Clips (1) an einem Einsatz auf Höhe der unteren Stützflächen (5, 5A) zu gewährleisten.

14. Befestigungsclip (1) nach einem der vorhergehenden Ansprüche, **dadurch gekennzeichnet, dass** er mindestens eine zweite (12) oder eine dritte elastische Abdeckung (14) aufweist, die mindestens ein unteres Seitenprofil (6) und mindestens eine untere Kontaktfläche (8) trägt, wobei die zweite (12) oder dritte elastische Abdeckung (14) eine höhere Flexibilität hat als die erste elastische Abdeckung (13), die die Nase (9) trägt.

15. Befestigungsclip (1) nach einem der vorhergehenden Ansprüche, **dadurch gekennzeichnet, dass** er sich in einer zur Mittelebene (P) parallelen Längsrichtung (D) erstreckt und in Richtung (D) auf der einen und anderen Seite hervorstehend mindestens einen ersten Abstandsstift (21) an einem ersten Längsende (24) und mindestens einen zweiten Abstandsstift (23) an einem zweiten Längsende (25) aufweist, wobei die Abstandsstifte so ausgebildet sind, dass sie das translatorische Halten des Clips (1) in Bezug auf die Öffnung gewährleisten.

## Claims

1. A U-shaped elastic fastening clip (1) having a center plane (P) which runs through a middle portion (2) and about which, proceeding from the middle portion, two wings (3; 3A) each include, one after the other and in this order, a lower supporting surface (5; 5A) facing inwards for clamping an insert, then a lower raised portion (7; 7A) projecting outwards and formed to be able to penetrate through an opening formed in a structure for receiving the insert, then, recessed in relation to the lower raised portion (7; 7A), a lower contact surface (8; 8A) facing outwards and formed to be able to cooperate with an inner surface of the opening, one of the wings (3) including a nose (9) projecting inwards to cooperate with a hole of the insert under the action of an approach of free ends (4; 4A) of the wings that are opposite to the middle portion (2), the wing (3) carrying the nose (9) having a first gap (10) which extends from the surroundings of the middle portion (2) to its free end (4) to separate, on the one hand, a first elastic cover (13) carrying the nose (9) and, on the other hand, a second elastic cover (12) carrying at least one lower raised portion (7) and at least one lower contact surface (8), the first elastic cover (13) including an upper lateral profile (19) in the form of a raised portion on the side opposite to the nose (9) and towards the exterior of the clip (1), the upper raised portion (19) including an upper contact surface (20) which is formed to be able to cooperate with an inner surface of the opening, **characterized in that** the upper raised portion (19) has a greater distance from the middle portion (2) than the lower raised portion (7).

2. The fastening clip (1) according to any of the preceding claims, **characterized in that** the wing (3) which carries the nose (9) has a second gap (11) on the side opposite to the first gap (10), the second gap (11) extending from the surroundings of the middle portion (2) to its free end (4) to separate, on the one hand, the first elastic cover (13) carrying the nose (9) and, on the other hand, a third elastic cover (14) carrying at least one lower lateral profile (6) and at least one lower contact surface (8).

3. The fastening clip (1) according to any of the preceding claims, **characterized in that** the first gap (10) does not open out at the level of the free end (4) of the wing (3) which includes the nose (9).

4. The fastening clip (1) according to claim 2, **characterized in that** the second gap (11) does not open out at the level of the free end (4).

5. The fastening clip (1) according to any of the preceding claims, **characterized in that** the upper contact surface (20) has a greater distance from the middle portion (2) than the lower contact surface (8).

6. The fastening clip (1) according to any of the preceding claims, **characterized in that** the wing (3A) which is opposite the wing (3) carrying the nose (9) includes, opposite the nose, a first elastic cover (13A) which includes an upper lateral profile (19A) on the side opposite to the nose (9) and towards the exterior of the clip (1), the upper lateral profile (19A) having a greater distance from the middle portion (2) than the lower raised portion (7A), the upper raised portion (19A) including an upper contact surface (20A) which is formed to be able to cooperate with an inner surface of the opening.

7. The fastening clip (1) according to the preceding claim, **characterized in that** the upper contact surface (20A) has a greater distance from the middle portion (2) than the lower contact surface (8A).

8. The fastening clip (1) according to claim 6 or 7, **characterized in that** the wing (3A) has a first gap (10A) which extends from the surroundings of the middle portion (2) to its free end (4A) to separate, on the one hand, the first elastic cover (13A) and, on the other hand, a second elastic cover (12A) which carries at least one lower raised portion (7A) and at least one lower contact surface (8A).

9. The fastening clip (1) according to the preceding claim, **characterized in that** the wing (3A) has a second gap (11A) on the side opposite to the first gap (10A), the second gap (11A) extending from the surroundings of the middle portion (2) to its free end (4A) to separate, on the one hand, the first elastic cover (13A) and, on the other hand, a third elastic cover (14A) which carries at least one lower lateral profile (6A) and at least one lower contact surface (8A).

10. The fastening clip (1) according to claim 8 or 9, **characterized in that** the first gap (10A) does not open out at the level of the free end (4A).

11. The fastening clip (1) according to claim 9, **characterized in that** the second gap (11A) does not open out at the level of the free end (4A).

12. The fastening clip (1) according to any of the preceding claims, **characterized in that** only one wing (3) includes the nose (9) and the other wing (3A) includes a recess (15A) opposite the nose (9), the recess (15A) being formed to permit the passage of the protruding part of the nose (9) towards the interior of the clip (1) in the compressed position of the clip, and allows the prolongation of the nose (9) by a length which corresponds to the depth of the recess (15A).

13. The fastening clip (1) according to any of the preceding claims, **characterized in that** the wing (3) which includes the nose (9) includes a recess (16) in the vicinity of the nose on the side of the middle portion (2) to ensure the support of the clip (1) at an insert at the level of the lower supporting surfaces (5, 5A).

14. The fastening clip (1) according to any of the preceding claims, **characterized in that** it includes at least one second (12) or one third elastic cover (14) carrying at least one lower lateral profile (6) and at least one lower contact surface (8), the second (12) or the third elastic cover (14) having a flexibility greater than that of the first elastic cover (13) carrying the nose (9).

15. The fastening clip (1) according to any of the preceding claims, **characterized in that** it extends in a longitudinal direction (D) parallel to the center plane (P) and includes at least one first spacer pin (21) at a first longitudinal end (24) and at least one second spacer pin (23) at a second longitudinal end (25) which protrude on either side in the direction (D), the spacer pins being formed to ensure holding of the clip (1) in translation in relation to the opening.

## Revendications

1. Clip de fixation (1) élastique en U, comprenant un plan médian (P) passant par une partie centrale (2) autour duquel deux ailes (3 ; 3A) comportent chacune à partir de la partie centrale successivement et dans cet ordre une surface d'appui inférieure (5 ; 5A) tournée vers l'intérieur pour le serrage d'un insert, puis un bossage inférieur (7 ; 7A) qui fait saillie vers l'extérieur et qui est réalisé de manière à être apte à traverser un orifice réalisé dans une structure pour la réception de l'insert, puis, en retrait par rapport au bossage inférieur (7 ; 7A), une surface de contact inférieure (8 ; 8A) qui est tournée vers l'extérieur et qui est réalisée de manière à être apte à coopérer avec une face intérieure de l'orifice, l'une des ailes (3) présentant un nez (9) qui fait saillie vers l'intérieur pour coopérer avec une ouverture de l'insert sous l'effet d'un rapprochement d'extrémités libres (4 ; 4A) des ailes qui sont opposées à la partie centrale (2), l'aile (3) portant le nez (9) présentant une première fente (10) qui s'étend depuis le voisinage de la partie centrale (2) vers son extrémité libre (4) pour séparer, d'une part, un premier voile élastique (13) portant le nez (9) et, d'autre part, un deuxième voile élastique (12) portant au moins un bossage inférieur (7) et au moins une surface de contact inférieure (8), le premier voile élastique (13) comportant du côté opposé au nez (9) et vers l'extérieur du clip (1) un profil latéral supérieur (19) sous forme de bossage, le bossage supérieur (19) comportant une surface de contact supérieure (20) réalisée de manière à être apte à coopérer avec la face intérieure de l'orifice, **caractérisé en ce que** le bossage supérieur (19) est plus éloigné de la partie centrale (2) que le bossage inférieur (7).

2. Clip de fixation (1) selon l'une des revendications précédentes, **caractérisé en ce que** l'aile (3) portant le nez (9) présente du côté opposé à la première fente (10) une deuxième fente (11) qui s'étend depuis le voisinage de la partie centrale (2) vers son extrémité libre (4) pour séparer, d'une part, le premier voile élastique (13) portant le nez (9) et, d'autre part, un troisième voile élastique (14) portant au moins un profil latéral inférieur (6) et au moins une surface de contact inférieure (8).

3. Clip de fixation (1) selon l'une des revendications précédentes, **caractérisé en ce que** la première fente (10) n'est pas débouchante au niveau de l'extrémité libre (4) de l'aile (3) qui présente le nez (9).

4. Clip de fixation (1) selon la revendication 2, **caractérisé en ce que** la deuxième fente (11) n'est pas débouchante au niveau de l'extrémité libre (4).

5. Clip de fixation (1) selon l'une des revendications précédentes, **caractérisé en ce que** la surface de contact supérieure (20) est plus éloignée de la partie centrale (2) que la surface de contact inférieure (8).

6. Clip de fixation (1) selon l'une des revendications précédentes, **caractérisé en ce que** l'aile (3A) qui est opposée à l'aile (3) portant le nez (9) présente face au nez un premier voile élastique (13A) lequel comporte du côté opposé au nez (9) et vers l'extérieur du clip (1) un profil latéral supérieur (19A) qui est plus éloigné de la partie centrale (2) que le bossage inférieur (7A), le bossage supérieur (19A) présentant une surface de contact supérieure (20A) qui est réalisée de manière à être apte à coopérer avec une face intérieure de l'orifice.

7. Clip de fixation (1) selon la revendication précédente, **caractérisé en ce que** la surface de contact supérieure (20A) est plus éloignée de la partie centrale (2) que la surface de contact inférieure (8A).

8. Clip de fixation (1) selon la revendication 6 ou 7, **caractérisé en ce que** l'aile (3A) présente une première fente (10A) qui s'étend depuis le voisinage de la partie centrale (2) vers son extrémité libre (4A) pour séparer, d'une part, le premier voile élastique (13A) et, d'autre part, un deuxième voile élastique (12A) portant au moins un bossage inférieur (7A) et au moins une surface de contact inférieure (8A).

9. Clip de fixation (1) selon la revendication précédente, **caractérisé en ce que** l'aile (3A) présente du côté opposé à la première fente (10A) une deuxième fente (11A) qui s'étend depuis le voisinage de la partie centrale (2) vers son extrémité libre (4A) pour séparer, d'une part, le premier voile élastique (13A) et, d'autre part, un troisième voile élastique (14A) portant au moins un profil latéral inférieur (6A) et au moins une surface de contact inférieure (8A).

10. Clip de fixation (1) selon la revendication 8 ou 9, **caractérisé en ce que** la première fente (10A) n'est pas débouchante au niveau de l'extrémité libre (4A).

11. Clip de fixation (1) selon la revendication 9, **caractérisé en ce que** la deuxième fente (11A) n'est pas débouchante au niveau de l'extrémité libre (4A).

12. Clip de fixation (1) selon l'une des revendications précédentes, **caractérisé en ce que** seule une aile (3) présente le nez (9) et l'autre aile (3A) présente face à ce dernier un dégagement (15A) qui est réalisé de manière à autoriser le passage de la partie saillante du nez (9) vers l'intérieur du clip (1) dans la position comprimée du clip et permet le rallongement du nez (9) d'une longueur égale à la profondeur du dégagement (15A).

13. Clip de fixation (1) selon l'une des revendications précédentes, **caractérisé en ce que** l'aile (3) qui présente le nez (9) présente au voisinage de ce dernier du côté de la partie centrale (2) un dégagement (16) pour assurer l'appui du clip (1) sur un insert au niveau des surfaces d'appui inférieures (5, 5A).

14. Clip de fixation (1) selon l'une des revendications précédentes, **caractérisé en ce qu'**il comporte au moins un deuxième (12) ou un troisième voile élastique (14) qui porte au moins un profil latéral inférieur (6) et au moins une surface de contact inférieure (8), le deuxième (12) ou le troisième voile élastique (14) présentant une flexibilité plus élevée que le premier voile élastique (13) qui porte le nez (9).

15. Clip de fixation (1) selon l'une des revendications précédentes, **caractérisé en ce qu'**il s'étend selon une direction longitudinale (D) parallèle au plan médian (P) et comporte en saille de part et d'autre selon la direction (D) au moins un premier pion d'espacement (21) à une première extrémité longitudinale (24) et au moins un deuxième pion d'espacement (23) à une deuxième extrémité longitudinale (25), les pions d'espacement étant réalisés de manière à assurer la retenue en translation du clip (1) par rapport à l'orifice.
